# EUROPÄISCHE PATENTANMELDUNG

(11) **EP 2 522 893 A2**
(43) Veröffentlichungstag der Anmeldung: **14.11.2012**
(21) Anmeldenummer: 12166637.4
(22) Anmeldetag: 03.05.2012
(51) Int. Cl.: F16L 23/028, F16L 47/14

(54) **Rohranordnung**

(30) Priorität: 13.05.2011 DE 202011100810 U
(71) Anmelder: VERITAS AG, 63571 Gelnhausen (DE)
(72) Erfinder: Rhein, Klaus, 63654 Buedingen (DE); Schieb, Michael, 72760 Puebla (MX)
(74) Vertreter: Witte, Weller & Partner

(57) **Zusammenfassung**

Rohranordnung (10) mit einem Rohrabschnitt (12), wobei an dem Rohrabschnitt (12) ein Rohrbördel (14) ausgebildet ist. Dabei ist der Rohrbördel (14) aus Kunststoff hergestellt und mit einem Umfangsabschnitt des Rohrabschnittes (12) verbunden.

## Beschreibung

Die vorliegende Erfindung betrifft eine Rohranordnung mit einem Rohrabschnitt, wobei an dem Rohrabschnitt ein Rohrbördel ausgebildet ist.

Es ist auf dem Gebiet der Rohrverbindungen bekannt, an Rohrabschnitten Rohrbördel auszubilden, indem der Rohrabschnitt axial gestaucht wird, wodurch ein Abschnitt größeren Durchmessers (Rohrbördel) entsteht. Diese Art von Rohrbördelherstellung ist sowohl bei Metallrohren als auch bei Kunststoffrohren bekannt. Es ist auch bekannt, Rohrbördel durch Aufweiten des Rohrdurchmessers herzustellen. Bei dieser Art von Herstellung von Rohrbördel ist es von Nachteil, dass die Rohrabschnitte durch die Umformung geschwächt oder teilweise vorgeschädigt werden ("Weißbruch").

Es ist daher die Aufgabe der Erfindung, eine verbesserte Rohranordnung anzugeben.

Die obige Aufgabe wird bei der eingangs genannten Rohranordnung dadurch gelöst, dass er Rohrbördel aus Kunststoff hergestellt und mit einem Umfangsabschnitt des Rohrabschnittes verbunden ist.

Bei der erfindungsgemäßen Rohranordnung kann der Rohrbördel folglich vorgesehen werden, ohne den Rohrabschnitt selber umformen zu müssen. Der Rohrbördel aus Kunststoff wird dabei an den Umfangsabschnitt des Rohrabschnittes angeformt oder auf eine sonstige Art und Weise fest mit diesem verbunden, bspw. durch Kleben.

Demzufolge wird der Nachteil vermieden, dass der Rohrabschnitt bei der Herstellung des Bördels geschwächt wird.

Die Aufgabe wird somit vollkommen gelöst.

Gemäß einer besonders bevorzugten Ausführungsform weist der Rohrbördel einen sich um den Umfangsabschnitt des Rohrabschnittes erstreckenden Wulstabschnitt auf.

Der Wulstabschnitt erstreckt sich dabei radial über den Umfangsabschnitt des Rohrabschnittes hinaus und kann bspw. dazu dienen, eine Rohrverbindung einzurichten.

Generell kann der Wulstabschnitt einen oder mehrere sich über Teilumfangsabschnitte des Rohrabschnittes erstreckende Wulstabschnitte aufweisen.

Besonders bevorzugt ist es jedoch, wenn der Wulstabschnitt umlaufend ausgebildet ist, sich also über den gesamten Umfangsabschnitt des Rohrabschnittes erstreckt.

Gemäß einer weiteren bevorzugten Ausführungsform ist der Rohrbördel aus mehreren in radialer Richtung übereinanderliegenden Schichten ausgebildet.

Bei dieser Ausführungsform kann der Rohrbördel durch ein aufeinanderfolgendes Aufbringen von Schichten gebildet werden.

Ferner ist es vorteilhaft, wenn der Rohrbördel einen weiteren Wulstabschnitt aufweist, der an einem weiteren Rohrabschnitt ausgebildet und einstückig mit dem Wulstabschnitt des Rohrabschnittes verbunden ist.

Bei dieser Ausführungsform kann der Rohrbördel zur Verbindung von Rohrabschnitten dienen, die parallel zueinander ausgerichtet sind, insbesondere beabstandet voneinander ausgerichtet. Hierdurch lässt sich folglich eine Rohranordnung aus mehreren Einzelrohrabschnitten bilden, die mittels des Rohrbördels in eine feste Lagebeziehung zueinander gebracht werden.

Generell ist es möglich, dass der Rohrbördel vorab als separates Bauteil aus Kunststoff hergestellt wird und anschließend fest mit dem Umfangsabschnitt des Rohrabschnittes verbunden wird, bspw. durch Kleben.

Von besonderem Vorzug ist es jedoch, wenn der Rohrbördel selbst aus einem Klebstoff hergestellt ist.

Bei dieser Ausführungsform eignen sich insbesondere Klebstoffe, die im späteren Einsatzbereich der Rohranordnung fest sind bzw. verfestigt bleiben.

Zum Aufbringen des Kunststoffmaterials zur Bildung des Rohrbördels ist es bevorzugt, wenn der Klebstoff ein heißschmelzfähiger Kunststoff (Hot-Melt-Kunststoff) ist.

Bei dieser Ausführungsform lässt sich der Klebstoff auf einfache Art und Weise in einem heißen Zustand aufbringen, in dem er fließfähig bzw. begrenzt fließfähig ist. Derartige heißschmelzfähige Kunststoffe erreichen bei Abkühlen eine relativ hohe Festigkeit und eignen sich aufgrund dieser Eigenschaft als Rohrbördel bzw. sonstiges Verbindungselement zwischen Rohrabschnitten.

Durch die Klebstoffeigenschaft wird zwischen dem Umfangsabschnitt des Rohrabschnittes und dem Rohrbördel dabei eine feste Verbindung eingerichtet.

Von besonderem Vorzug ist es, wenn der Kunststoff ausgewählt ist aus einem oder mehreren der Gruppe von Kunststoffen, die Polyamid, Polyolefin und Copolyester aufweist.

Diese Kunststoffe eignen sich insbesondere zur Ausbildung von Rohrbördeln.

Der Rohrabschnitt selbst kann aus einem Kunststoff hergestellt sein, kann jedoch auch aus Metall hergestellt sein.

Von besonderem Vorzug ist es ferner, wenn der Rohrabschnitt eine Umfangsnut aufweist, in die der Rohrbördel eingesetzt ist.

Bei dieser Ausführungsform kann in axialer Richtung eine Art Formschluss zwischen dem verfestigten Rohrbördel und dem Rohrabschnitt eingerichtet werden, so dass hohe axiale Haltekräfte über den Rohrbördel erzielbar sind.

Die obige Erfindung wird ferner gelöst durch ein Verfahren zum Herstellen einer Rohranordnung, insbesondere einer Rohranordnung der oben beschriebenen Art, wobei das Verfahren die Schritte aufweist, einen Rohrabschnitt bereitzustellen und auf eine Umfangsfläche des Rohrabschnittes einen Wulstabschnitt aus einem Kunststoff aufzubringen, derart, dass der Wulstabschnitt einen Rohrbördel bildet.

Der Kunststoff ist dabei bevorzugt ein heißschmelzfähiger Klebstoff der oben beschriebenen Art.

Bei dem erfindungsgemäßen Verfahren ist es von Vorzug, wenn der Wulstabschnitt durch eine Relativbewegung zwischen dem Rohrabschnitt und einer Düse aufgebracht wird, aus der das Kunststoffmaterial im fließfähigen Zustand strömt (bspw. bereitgestellt durch einen Extruder).

Hierbei wird auf den Umfangsabschnitt des Rohrabschnittes eine Raupe aus dem Kunststoffmaterial aufgebracht, die nach Verfestigung den Wulstabschnitt bildet.

Besonders bevorzugt ist es hierbei, wenn der radiale Abstand zwischen der Düse und dem Rohrabschnitt einstellbar ist.

Hierbei ist es bspw. möglich, auf die radiale Höhe des Wulstabschnittes Einfluss zu nehmen.

Dabei ist es von besonderem Vorteil, wenn die Höhe des mittels der Düse aufgebrachten Wulstabschnittes durch eine Sensoranordnung überwacht wird.

Hierdurch kann ein über den Umfang umlaufender Wulstabschnitt mit einer durchgehend einheitlichen Höhe ausgebildet werden.

Ferner ist es bevorzugt, wenn der Wulstabschnitt durch eine Mehrzahl von radial übereinanderliegenden Schichten gebildet wird.

Bei dieser Ausführungsform kann der Wulstabschnitt bspw. dadurch gebildet werden, dass die Relativbewegung zwischen dem Rohrabschnitt und der Düse ein mehrfaches Umlaufen um den Umfangsabschnitt des Rohrabschnittes beinhaltet. Hierbei ist es möglich, jeweils eine relativ dünne Raupe aus den Kunststoffmaterial aufzubringen, die relativ schnell abkühlt und ihre Form fortan beibehält. Dabei ist es möglich, auf einen derart verfestigten Raupenabschnitt nach einem Umlauf um den Umfangsabschnitt erneut eine weitere relativ dünne Lage aus dem Kunststoffmaterial aufzutragen, so dass der Wulstabschnitt letztlich durch eine Mehrzahl von radial übereinanderliegenden Schichten gebildet wird.

Die obige Art des Aufbringens eines Wulstabschnittes ist mittels einer vergleichsweise einfach aufgebauten Vorrichtung realisierbar.

Um insbesondere eine definierte Formgebung des Wulstabschnittes zu erzielen, ist es alternativ bevorzugt, wenn der Rohrabschnitt in ein Werkzeug eingesetzt wird und wenn das Kunststoffmaterial in einen sich um den Rohrabschnitt herum erstreckenden Hohlraum des Werkzeuges eingeführt wird.

Diese Art der Aufbringung des Wulstabschnittes entspricht dabei einer Art Spritzgussverfahren. Das in den Hohlraum eingeführte Kunststoffmaterial verbleibt anschließend in dem Hohlraum, bis es sich verfestigt hat und eine feste Verbindung mit dem Rohrabschnitt eingegangen ist. Anschließend kann das Werkzeug wieder geöffnet werden, um die fertiggestellte Rohranordnung zu entnehmen.

Dabei ist es von besonderem Vorzug, wenn in ein Werkzeug eine Mehrzahl von Rohrabschnitten eingesetzt wird und wenigstens zwei Hohlräume miteinander verbunden sind, derart, dass diese Rohrabschnitte durch den so gebildeten Gesamtrohrbördel miteinander verbunden werden.

Bei dieser Ausführungsform ist es möglich Rohrabschnitte beabstandet voneinander durch den Gesamtrohrbördel festzulegen. Die Rohrabschnitte können dabei parallel zueinander verlaufen, können jedoch auch winklig zueinander verlaufen.

Bevorzugt umfasst die vorliegende Erfindung folglich Rohranordnungen mit Rohrbördeln, die durch Spritzguss- oder Extrusionsverfahren auf Umfangsabschnitte der Rohrabschnitte aufgebracht werden. Bei Verwendung von Formwerkzeugen kann eine exakte Geometrie der Rohrbördel erzielt werden.

Ferner ist es vergleichsweise einfach, an einem Rohr mehrere Rohrbördel anzubringen. Dies kann bei dem oben beschriebenen Extrusionsverfahren mittels einer Düse nacheinander erfolgen. Bei Verwendung eines Formwerkzeuges können mehrere Bördel auch gleichzeitig an dem Rohrabschnitt angeformt werden.

Das Kunststoffmaterial zur Herstellung der Rohrbördel kann drucklos, durch Nieder- oder durch Hochdruck aufgebracht werden. Der Auftrag kann entweder frei erfolgen oder mittels Formwerkzeugen. Die Verbindung zwischen dem Rohrabschnitt und dem Rohrbördel kann stoff- und/oder kraftschlüssig sein, im Fall des Bereitstellens einer Nut an dem Rohrabschnitt auch formschlüssig.

Die Herstellung der Rohranordnungen kann manuell, teil- oder vollautomatisiert erfolgen. Einzelne oder mehrere Rohrbördel können im Prozessverlauf hergestellt werden. Auch ist es möglich, mehrere Einzelrohre gleichzeitig zu bearbeiten.

Rohranordnungen der oben beschriebenen Art werden insbesondere im Automobilbau zum Transport verschiedener Medien eingesetzt, z.B in Form kraftstoffführender Leitungen, Entlüftungsleitungen, Bremsunterdruckleitungen, ölführender Leitungen, Ladeluftleitungen, etc. Sofern die verwendeten Rohrabschnitte aus Kunststoff hergestellt sind, werden diese Rohranordnungen in der Regel vorkonfektioniert und/oder thermogeformt angeliefert.

Die Rohrbördel dienen zum einfacheren Verbauen der Rohre in dafür vorgesehene Halter, oder dienen als Anschlag für die Montage von Anschlussteilen (Schläuche etc.). Bei den erfindungsgemäßen Rohranordnungen ist es zudem möglich, den Versatz (bspw. gegenüber einem axialen Ende des Rohrabschnittes) und/oder die Kontur des Rohrbördels in weiten Grenzen einzustellen und zu definieren.

Im Falle der Verwendung von Rohrabschnitten aus Kunststoff ist es bevorzugt, wenn die Rohrabschnitte vorab durch Thermoformen in ihre Endform gebracht werden. Da hierbei der Rohrbördel erst nach dem Thermoformen angebracht wird, kann ein undefiniertes Rückstellverhalten vermieden werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Längsschnittansicht durch eine Rohranordnung gemäß einer Ausführungsform der Erfindung;
- Fig. 2: eine Schnittansicht entlang der Linie II-II der Fig. 1;
- Fig. 3: eine Längsschnittansicht durch eine weitere Ausführungsform einer erfindungsgemäßen Rohranordnung;
- Fig. 4: eine Schnittansicht entlang der Linie IV-IV der Fig. 3;
- Fig. 5: eine Vorrichtung zum Herstellen einer erfindungsgemäßen Rohranordnung gemäß einer ersten Ausführungsform;
- Fig. 6: eine Schnittansicht durch eine weitere Ausführungsform einer Vorrichtung zur Herstellung einer erfindungsgemäßen Rohranordnung; und
- Fig. 7: eine Seitenansicht der Vorrichtung der Fig. 6.

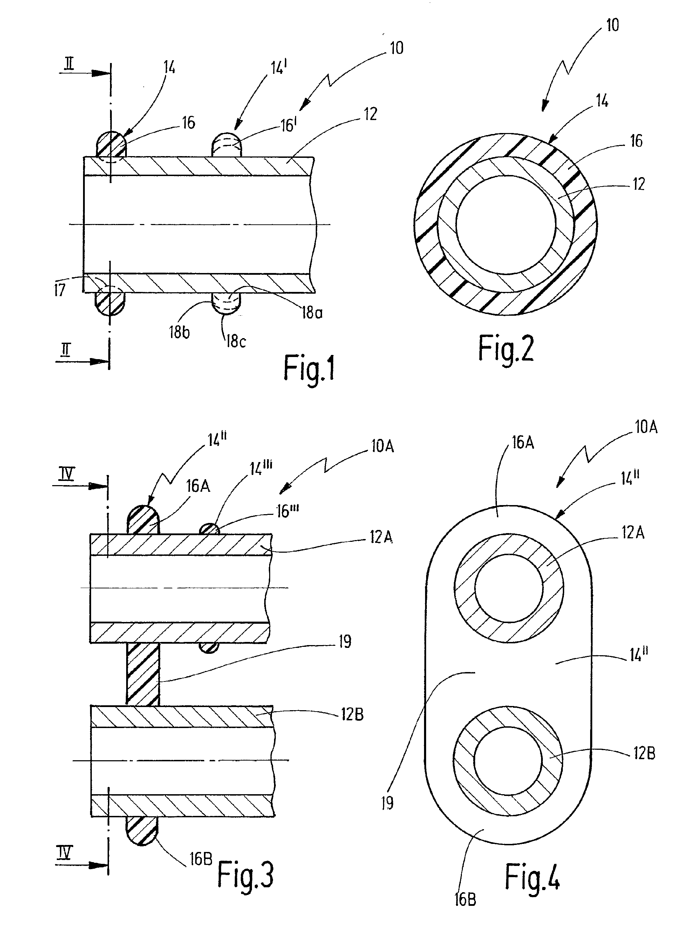

In den Figuren 1 und 2 ist eine erste Ausführungsform einer erfindungsgemäßen Rohranordnung generell mit 10 bezeichnet.

Die Rohranordnung 10 weist einen Rohrabschnitt 12 auf, der einen in axialer Richtung durchgehend einheitlichen Rohrdurchmesser aufweist. Der Rohrabschnitt 12 kann aus Kunststoff hergestellt sein, bspw. aus PA 11, PA 12, PA 6, PA 6.10 oder aus TPE. Der Rohrabschnitt 12 kann durchgehend aus einem einheitlichen Material hergestellt sein, kann jedoch auch als Mehrschichtrohrabschnitt ausgebildet sein, wobei eine Außenschicht vorzugsweise aus den oben genannten Materialien hergestellt ist.

Ferner kann der Rohrabschnitt aus Stahl, Edelstahl, Aluminium hergestellt sein. Auch ist es möglich, dass der Rohrabschnitt 12 als beschichtetes Stahlrohr oder als beschichtetes Aluminiumrohr ausgebildet ist, wobei die Beschichtung vorzugsweise aus PA hergestellt ist.

Die Rohranordnung 10 weist ferner einen Rohrbördel 14 auf, der um einen Außenumfangsabschnitt des Rohrabschnittes 12 herum ausgebildet ist. Der Rohrbördel 14 ist aus Kunststoff hergestellt und mit dem Außenumfangsabschnitt des Rohrabschnittes 12 fest verbunden, bspw. durch Kleben.

Besonders bevorzugt ist es, wenn der Rohrbördel 14 aus einem heißschmelzfähigen Kunststoff ("Hot-Melt-Kunststoff") hergestellt ist, insbesondere aus Polyamid, Polyolefin oder Copolyester, oder aus einer Kombination dieser Kunststoffe.

Der Rohrbördel 14 ist vorliegend gebildet durch ein Wulstabschnitt 16, der als umlaufender Wulstabschnitt ausgebildet ist und bspw. durch einen Extrusionsprozess oder einen Spritzgießprozess auf die Oberfläche des Außenumfanges aufgetragen worden ist, und zwar in einen flüssigen bzw. zähflüssigen Zustand. Die Geometrie des Rohrbördels 14 kann beliebig gewählt werden und ist in Fig. 1 als etwa halbkreisförmig dargestellt. Die Geometrie kann jedoch auch polygonal sein, insbesondere, wenn der Rohrbördel 14 in einem Spritzgussverfahren (siehe unten) aufgebracht worden ist.

In Fig. 1 ist gestrichelt dargestellt, dass der Rohrabschnitt 12 in jenem Bereich, wo der Rohrbördel 14 aufgebracht wird, eine Umfangsnut 17 aufweisen kann. In diesem Fall wird zwischen dem Rohrabschnitt 12 und dem Rohrbördel 14 in axialer Richtung nicht nur eine stoff- und/oder kraftschlüssige Verbindung eingerichtet, sondern auch eine Art formschlüssige Verbindung. Die axialen Haltekräfte des Rohrbördels 14 können hierdurch erhöht werden.

Ferner ist in Fig. 1 ein optionaler weiterer Rohrbördel 14' dargestellt, der aus einem Wulstabschnitt 16' gebildet ist. Der Wulstabschnitt 16' besteht im vorliegenden Fall aus einer Mehrzahl von Schichten 18a, 18b, 18c, die in radialer Richtung übereinanderliegen. Ein derartiger Wulstabschnitt 16' kann bspw. durch ein Extrusionsverfahren hergestellt werden, wie es nachstehend beschrieben wird.

In den Figuren 3 und 4 ist eine weitere Ausführungsform einer erfindungsgemäßen Rohranordnung dargestellt und generell mit 10A bezeichnet. Die Rohranordnung 10A entspricht hinsichtlich Aufbau und Funktionsweise generell der Rohranordnung 10 der Figuren 1 und 2. Gleiche Elemente sind daher mit gleichen Bezugsziffern bezeichnet. Im Folgenden werden im Wesentlichen die Unterschiede erläutert.

Bei der Ausführungsform der Figuren 3 und 4 weist die Rohranordnung 10A einen ersten Rohrabschnitt 12A und einen zweiten Rohrabschnitt 12B auf, die beabstandet voneinander angeordnet sind. Ferner weist die Rohranordnung 10A einen Rohrbördel 14" auf, der gebildet ist durch einen ersten Wulstabschnitt 16A, der um den ersten Rohrabschnitt 12A herum ausgebildet ist, und durch einen zweiten Wulstabschnitt 16B, der um den zweiten Rohrabschnitt 12B herum ausgebildet ist. Die zwei Wulstabschnitte 16A, 16B sind miteinander über einen Verbindungsabschnitt 19 verbunden, der einstückig mit den Wulstabschnitten 16A, 16B ausgebildet ist. Durch den Rohrbördel 14" können folglich die zwei Rohrabschnitte 12A, 12B relativ zueinander fixiert werden. Die Ausführungsform der Figuren 3 und 4 wird vorzugsweise in einem Spritzgießprozess hergestellt, wie er nachstehend beschrieben wird.

In Fig. 3 ist ferner gezeigt, dass es möglich ist, an einem Rohrabschnitt (bspw. Rohrabschnitt 12A) mehrere Rohrbördel vorzusehen, bspw. neben dem Rohrbördel 14" einen weiteren Rohrbördel 14''', der bspw. nur als Wulstabschnitt 16''' um den ersten Rohrabschnitt 12A herum ausgebildet ist.

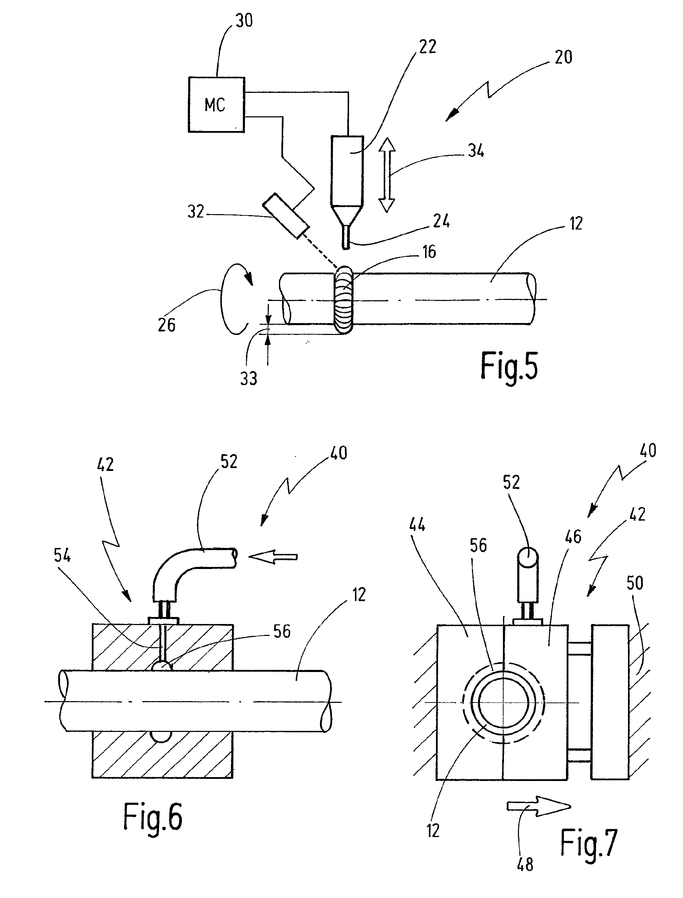

In Fig. 5 ist eine erste Vorrichtung zur Herstellung einer erfindungsgemäßen Rohranordnung gezeigt und generell mit 20 bezeichnet.

Die Herstellvorrichtung 20 weist eine Auftragseinrichtung 22 auf, die in Fig. 5 schematisch dargestellt ist und bspw. einen Extruder zum Bereitstellen einer zähflüssigen Kunststoffmasse beinhaltet. Ferner beinhaltet die Auftragseinrichtung 22 eine Düse 24, über die der zähfließende Kunststoff bzw. Klebstoff ausgebracht werden kann. Ein bereitgestellter Rohrabschnitt 12 wird so gelagert, dass er in der Herstellvorrichtung 20 um seine Längsachse gedreht werden kann, wie es bei 26 gezeigt ist. Alternativ ist vorgesehen, dass die Düse 24 um den Rohrabschnitt 12 herum rotiert wird.

Ferner beinhaltet die Herstellvorrichtung 20 eine Steuereinrichtung 30, die die Auftragseinrichtung 22 ansteuert. Durch koordiniertes Ausbringen des Kunststoffes aus der Auftragseinrichtung 22 und Drehen des Rohrabschnittes 12 kann um den Außenumfang des Rohrabschnittes 12 eine Bördelraupe in Form eines Wulstabschnittes 16 aufgebracht werden. Dabei ist darauf zu achten, dass der Kunststoff so zähfließend ist, dass er seine Form im Wesentlichen beibehält, bis er durch Abkühlung wieder verfestigt ist.

Ferner weist die Herstellvorrichtung 20 vorzugsweise eine Sensoranordnung 32 auf, die dazu ausgelegt ist, die Höhe 33 und/oder eine Breite des Wulstabschnittes 16 zu erfassen. Die Sensoranordnung 32 ist mit der Steuereinrichtung 30 verbunden. Folglich kann die Form, insbesondere die Höhe 33 des Wulstabschnittes 16, überwacht werden. Ferner kann vorzugsweise in Abhängigkeit von einem Signal der Sensoranordnung 32 die Drehgeschwindigkeit des Rohrabschnittes 12 geregelt werden. Bei 34 ist ferner gezeigt, dass zumindest die Düse 24 der Auftragseinrichtung 22 in einer radialen Richtung relativ zu dem Rohrabschnitt 12 bewegbar ist. Bei dieser Ausführungsform kann ggf. durch Verändern der Höhe Einfluss auf die Form des Wulstabschnittes 16 genommen werden.

Von besonderem Vorzug ist es jedoch, wenn der Wulstabschnitt 16 durch eine Mehrzahl von Schichten gebildet wird, wie es in Fig. 1 bei 18a bis 18c gezeigt ist. In diesem Fall wird der Wulstabschnitt 16 nicht im Rahmen von einer Umdrehung des Rohrabschnittes 12 gebildet, sondern während einer Mehrzahl von Umdrehungen des Rohrabschnittes 12. Hierbei ist es möglich, jeweils nur einen relativ dünne Raupe aufzubringen, die schneller durch Abkühlung verfestigen kann. Insbesondere ist es möglich, dass nach einer Umdrehung des Rohrabschnittes 12 der als erstes aufgetragene Teil der Raupe bereits verfestigt ist, so dass hierüber bereits wieder eine nächste Schicht (bspw. 18b) aufgetragen werden kann, usw. Durch diese Maßnahme kann die Höhe 33 des Wulstabschnittes 16 sehr genau überwacht und eingestellt werden.

Dabei versteht sich, dass die Düse 24 in Richtung 34 für jede einzelne Schicht weiter von dem Umfang des Rohrabschnittes 12 wegbewegt wird.

Zur Herstellung von erfindungsgemäßen Rohranordnungen mit einem Rohrbördel 14, der eine definierte Geometrie aufweist, eignet sich eine weitere Ausführungsform einer Herstellvorrichtung, wie sie in Figuren 6 und 7 dargestellt ist.

Die Herstellvorrichtung 40 der Figuren 6 und 7 ist als Spritzgießwerkzeug ausgebildet und weist eine erste Werkzeughälfte 44 und eine zweite Werkzeughälfte 46 auf, die in Fig. 7 in einem geschlossenen Zustand gezeigt sind und aus diesem geschlossenen Zustand in einer Öffnungsrichtung 48 geöffnet werden können.

Hierzu ist bspw. die zweite Werkzeughälfte 46 relativ zu einem Gehäuse 50 der Herstellvorrichtung 40 bewegbar ausgebildet, wie es in Fig. 7 angedeutet ist.

Im geschlossenen Zustand bilden die Werkzeughälften 44, 46 einen Zylinderhohlraum zur Aufnahme des Rohrabschnittes 12, wobei in dem Bereich, wo ein Rohrbördel 14 aufzubringen ist, ein Rohrbördel-Hohlraum 56 ausgebildet ist, der als Ringhohlraum um den Rohrabschnitt 12 herum geformt ist. Der Hohlraum 56 ist über einen Einführkanal 54 mit einem Zuführrohr 52 zum Zuführen von fließfähigem Kunststoff verbunden.

Zum Herstellen einer erfindungsgemäßen Rohranordnung werden die Werkzeughälften 44, 46 geöffnet. Anschließend wird ein Rohrabschnitt 12 eingelegt. Anschließend werden die Werkzeughälften 44, 46 geschlossen und es wird Kunststoff in den Hohlraum 56 eingespritzt. Anschließend wird abgewartet, bis der Kunststoff formstabil ist und/oder ausgehärtet ist. Anschließend werden die Werkzeughälften 44, 46 wieder geöffnet und die fertiggestellte Rohranordnung kann entnommen werden.

In einer Herstellvorrichtung 40 der in Figuren 6 und 7 gezeigten Art können mehrere Hohlräume 56 vorgesehen sein, um in axialer Richtung hintereinander an einem einzelnen Rohrabschnitt 12 eine Mehrzahl von Rohrbördeln vorzusehen. Gemäß einer weiteren bevorzugten Ausführungsform weist eine alternative Ausführungsform einer solchen Herstellvorrichtung Aufnahmen für zwei oder mehr Rohrabschnitte auf, wobei ein Hohlraum 56 für den Kunststoff gebildet ist durch Ringhohlräume für die jeweiligen Rohrabschnitte, von denen wenigstens zwei miteinander verbunden sind. Auf diese Weise kann eine Rohranordnung 10A der in Figuren 3 und 4 gezeigten Art hergestellt werden.

## Patentansprüche

1. Rohranordnung (10) mit einem Rohrabschnitt (12), wobei an dem Rohrabschnitt (12) ein Rohrbördel (14) ausgebildet ist,
**dadurch gekennzeichnet, dass**
der Rohrbördel (14) aus Kunststoff hergestellt und mit einem Umfangsabschnitt des Rohrabschnittes (12) verbunden ist.

2. Rohranordnung nach Anspruch 1, **dadurch gekennzeichnet, dass** der Rohrbördel (14) einen sich um den Umfangsabschnitt des Rohrabschnittes (12) erstreckenden Wulstabschnitt (16) aufweist.

3. Rohranordnung nach Anspruch 2, **dadurch gekennzeichnet, dass** der Wulstabschnitt (16) umlaufend ausgebildet ist.

4. Rohranordnung nach einem der Ansprüche 1 bis 3, **dadurch gekennzeichnet, dass** der Rohrbördel (14') aus mehreren in radialer Richtung übereinander liegenden Schichten (18) ausgebildet ist.

5. Rohranordnung nach einem der Ansprüche 2 - 4, **dadurch gekennzeichnet, dass** der Rohrbördel (14") einen weiteren Wulstabschnitt (16B) aufweist, der an einem weiteren Rohrabschnitt (12B) ausgebildet und einstückig mit dem Wulstabschnitt (16A) des Rohrabschnittes (12A) verbunden ist.

6. Rohranordnung nach einem der Ansprüche 1 - 5, **dadurch gekennzeichnet, dass** der Rohrbördel (14) aus einem Klebstoff hergestellt ist.

7. Rohranordnung nach Anspruch 6, **dadurch gekennzeichnet, dass** der Klebstoff ein heißschmelzfähiger Kunststoff ist.

8. Rohranordnung nach einem der Ansprüche 1 - 7, **dadurch gekennzeichnet, dass** der Rohrabschnitt aus Kunststoff hergestellt ist.

9. Rohranordnung nach einem der Ansprüche 1 - 7, **dadurch gekennzeichnet, dass** der Rohrabschnitt (12) aus Metall hergestellt ist.

10. Rohranordnung nach einem der Ansprüche 1 - 9, **dadurch gekennzeichnet, dass** der Rohrabschnitt (12) eine Umfangsnut (17) aufweist, in die der Rohrbördel (14) eingesetzt ist.

11. Verfahren zum Herstellen einer Rohranordnung (10), insbesondere nach einem der Ansprüche 1 bis 10, mit den Schritten:
- Bereitstellen eines Rohrabschnittes (12);
- Aufbringen eines Wulstabschnittes (16) aus einem Kunststoff auf eine Umfangsfläche des Rohrabschnittes (12), derart, dass der Wulstabschnitt (16) einen Rohrbördel (14) bildet.

12. Verfahren nach Anspruch 11, wobei der Wulstabschnitt (16) durch eine Relativbewegung zwischen dem Rohrabschnitt (12) und einer Düse (24) aufgebracht wird, aus der das Kunststoffmaterial im fließfähigen Zustand strömt.

13. Verfahren nach Anspruch 12, wobei der radiale Abstand zwischen der Düse (24) und dem Rohrabschnitt (12) einstellbar ist.

14. Verfahren nach einem der Ansprüche 11 - 13, **dadurch gekennzeichnet, dass** der Wulstabschnitt (16) durch eine Mehrzahl von radial übereinanderliegenden Schichten (18) gebildet wird.

15. Verfahren nach Anspruch 11, wobei der Rohrabschnitt (12) in ein Werkzeug (42) eingesetzt wird und das Kunststoffmaterial in einen sich um den Rohrabschnitt (12) herum erstreckenden Hohlraum (56) des Werkzeuges (42) eingeführt wird
